# FASCICULE DE BREVET EUROPEEN

(11) **EP 1 691 111 B1**
(45) Date de publication et mention de la délivrance du brevet: **27.02.2008**
(21) Numéro de dépôt: 06300090.5
(22) Date de dépôt: 31.01.2006
(51) Int. Cl.: F16H 63/18, F16H 59/04

(54) **Dispositif de commande du changement des rapports de vitesse dans une boîte de vitesses d'un véhicule**
Gangwechselsteuerung in einem Getriebe eines Fahrzeugs
Gear change Control device in a transmission of a vehice

(30) Priorité: 11.02.2005 FR 0501411
(43) Date de publication de la demande: 16.08.2006
(73) Titulaire: Renault, 92109 Boulogne Billancourt (FR)
(72) Inventeur: Fournier, Vincent, F-92300 Levallois-Perret (FR); Maillard, Jean-Pierre, F-78790 Septeuil (FR); Retailleau, Xavier, F-92800 Puteaux (FR)
(74) Mandataire: Davies, Owen Robert Treharne

(56) Documents cités:
- WO-A-96/23995
- DE-U1-5202004 016 47
- FR-A- 2 582 370
- FR-A- 2 760 263
- FR-A- 2 802 600
- FR-A- 2 850 441

## Description

La présente invention concerne un dispositif de commande du changement des rapports de vitesse dans une boîte de vitesses d'un véhicule.

Des dispositifs de commande ont été décrits dans FR-A- 2802600 et FR-A-2850441. En outre, [page 1a]

Notamment, le document FR-A-2850 441 décrit un dispositif de commande interne de boîte de vitesses munie d'un double embrayage. Ce dispositif comporte un barillet de sélection cylindrique ou « sélecteur », mobile en rotation autour de son axe, portant trois secteurs périphériques de plus grand diamètre. Le dispositif comporte également un chariot de passage, également de forme cylindrique, coaxial au barillet et placé à l'intérieur de celui-ci. Le chariot de passage est mobile en rotation et en translation axiales. Il comporte des doigts pouvant coulisser à l'intérieur d'ouvertures axiales du barillet.

La rotation du barillet permet ainsi le positionnement d'un doigt entre les deux branches d'un crabot déterminé. Ensuite, la translation axiale du chariot de passage dans un sens déplace ledit doigt de manière à pousser axialement une desdites branches jusqu'à enclenchement d'une vitesse. Une translation axiale du chariot dans l'autre sens enclenche une autre vitesse, par poussée sur l'autre branche du crabot.

Lorsque le crabot est arrivé dans une position active, c'est-à-dire dans laquelle il maintient une vitesse enclenchée, il est lui-même maintenu en position par l'engagement d'une bille poussée par un ressort dans un logement correspondant, ménagé dans la fourchette.

La rotation du barillet peut également conduire à l'engagement d'un secteur périphérique entre les branches d'un crabot actif. Un secteur périphérique présente deux rampes symétriques conformées pour translater, puis bloquer, un crabot actif dans une position inactive, dite « de point mort ». Cette translation résulte de la poussée d'une des rampes sur une des branches du crabot. La géométrie du crabot et des rampes conduit cependant à un contact ponctuel. Il en résulte une usure prématurée du crabot et des rampes.

Le document FR-A-2582370 montre un dispositif de commande du changement des rapports de vitesse dans une boîte de vitesses d'un véhicule, comprenant au moins une fourchette munie d'un tenon, un barillet comme un sélecteur de vitesses monté en rotation, ledit sélecteur comportant au moins une rainure de rappel en sélection coopérant avec ledit tenon pour ramener au point mort un rapport de vitesses engagé,
- la rainure s'étend selon un cylindre de même axe x, x' que sélecteur et comporte deux surfaces formant une pente par rapport au plan médian du sélecteur
- la première surface de la rainure monte vers un sommet en prenant contact avec une surface du tenon pour commander une translation de celui-ci par rotation du sélecteur dans un premier sens,
- la seconde surface descend à partir du sommet

Par ailleurs, pour désengager une vitesse, il est nécessaire de dégager de son logement la bille de blocage du crabot, c'est-à-dire de surmonter l'effort dit « de billage ». L'effort de dégagement varie donc au cours du déplacement du crabot.

Ainsi, les rampes sont soumises à des efforts qui varient le long de celles-ci, ce qui n'est pas non plus favorable au rendement de la transformation du mouvement et à l'endurance dans le temps, compte tenu des contacts ponctuels qui sont mis en jeu.

Le but de la présente invention est de remédier aux inconvénients ci-dessus.

Selon l'invention, le dispositif de commande du changement des rapports de vitesse dans une boîte de vitesses d'un véhicule, comprend au moins un crabot de fourchette monté mobile en translation sur un axe de crabot fixe, et un sélecteur de vitesses monté en rotation sur un axe de sélecteur fixe. Ledit sélecteur comporte au moins une rampe de rappel en sélection coopérant avec ledit crabot pour ramener au point mort un rapport de vitesses engagé. Ladite rampe comporte une première surface qui monte vers un sommet et prend contact avec une surface dudit crabot pour commander une translation de celui-ci par rotation dudit sélecteur dans un premier sens et une deuxième surface qui descend à partir dudit sommet. Le dispositif selon l'invention est remarquable en ce que ladite première surface de ladite rampe et ladite surface dudit crabot sont adaptées pour que le contact entre ces surfaces soit linéique sur au moins une partie de la longueur de ladite rampe, de préférence tout au long de ladite première surface.

Par rapport à un contact ponctuel, un contact linéique permet de réduire l'usure des surfaces de la rampe et du crabot en contact. Par « contact linéique », on entend un contact selon une ligne, rectiligne ou non. De préférence la ligne de contact est de longueur sensiblement constante quelle que soit la position du crabot sur ladite première surface de ladite rampe.

De préférence, ladite deuxième surface de la rampe est conformée pour commander ladite translation dudit crabot par poussée de ladite deuxième surface sur ladite surface dudit crabot lors d'une rotation dudit sélecteur dans un sens opposé audit premier sens. Avantageusement, il est ainsi possible de ramener ledit crabot au point mort par rotation du sélecteur dans un sens ou dans l'autre.

De manière préférée, ladite deuxième surface et ladite surface dudit crabot sont conformées de manière à assurer un contact linéique entre lesdites deuxième surface et surface dudit crabot. Avantageusement, l'usure du crabot est donc limitée quelle que soit la surface de la rampe utilisée pour replacer le crabot au point mort.

De préférence, au moins une desdites première et deuxième surfaces de ladite rampe présente une pente principale variable.

De préférence, en un point de ladite rampe, ladite pente principale est déterminée en fonction de l'effort qu'il est nécessaire d'exercer sur ladite surface dudit crabot pour déplacer ledit crabot lorsque ladite surface dudit crabot est en contact avec ledit point de ladite rampe. Avantageusement, la pente principale de la rampe est ainsi adaptée pour prendre en compte une résistance plus ou moins grande du crabot à l'encontre de la translation, en particulier lors du dégagement de la bille de blocage.

De préférence encore, la pente principale est d'autant plus faible que l'effort à exercer sur le crabot pour le déplacer en translation est important. Avantageusement, cette disposition permet de mieux répartir l'effort sur la longueur de la rampe et donc de réduire l'usure.

De manière préférée entre toutes, ladite pente principale présente un angle α₁ constant sur une partie inférieure de ladite rampe et un angle α₂ constant sur une partie supérieure de ladite rampe, α₁ étant inférieur à α₂. De manière avantageuse, ladite pente principale présente ainsi une partie dans laquelle l'angle α est réduit pour permettre une démultiplication plus importante dans la portion de la course de translation où l'effort exercé est maximal et une partie dans laquelle l'angle α est plus important dans la portion de la course de translation où l'effort exercé est moins important.

De préférence, un profil de ladite rampe dans un plan P' de coupe radiale dudit sélecteur, présente une pente secondaire β par rapport à un plan P dudit sélecteur, ladite pente secondaire β étant déterminée de manière à assurer ledit contact linéique.

Par ailleurs, l'invention se rapporte également à une boîte de vitesses, de préférence à double embrayage, destinée en particulier à un véhicule automobile, comportant un dispositif de commande selon l'invention.

D'autres particularités et avantages de l'invention apparaîtront encore dans la description ci-après.

Aux dessins annexés, donnés à titre d'exemples non limitatifs :
- la figure 1 est une vue en perspective d'un sélecteur de vitesses d'un dispositif de commande selon l'invention montrant l'une des rampes de rappel,
- la figure 2 est une autre vue en perspective du sélecteur de vitesses prise sous un angle différent,
- la figure 3 est une vue en perspective d'un dispositif de commande selon l'invention,
- la figure 4 est une courbe montrant l'évolution de l'effort exercé sur les surfaces en contact, ainsi que de l'angle d'une rampe en fonction de la course de translation des crabots de fourchettes,
- la figure 5 montre schématiquement une coupe longitudinale développée d'une rampe d'un dispositif de commande selon l'invention,
- la figure 6 montre schématiquement en coupe une rampe.

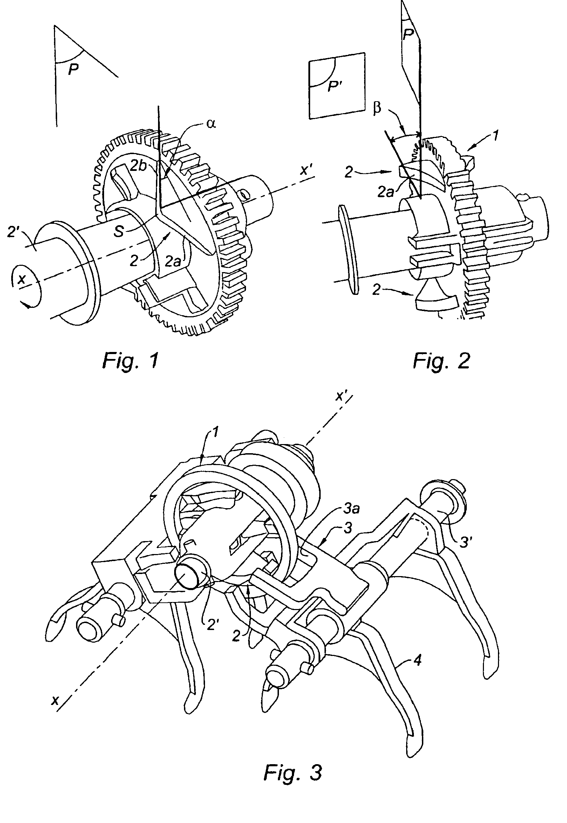

Dans la réalisation représentée sur les figures 1 à 3, le dispositif de commande du changement des rapports de vitesse dans une boîte de vitesses d'un véhicule comprend un sélecteur de vitesses 1 monté en rotation suivant un axe x-x' sur un axe de sélecteur 2' solidaire d'un carter non représenté.

On appelle « plan du sélecteur » P, un plan perpendiculaire à l'axe x-x'. Dans le mode de réalisation représenté, le sélecteur 1 s'étend principalement selon le plan P.

Le crabot 3 est monté mobile en translation axiale sur un axe de crabot 3', solidaire d'un carter non représenté. L'axe de crabot 3' est sensiblement parallèle à l'axe du sélecteur 2'.

Le sélecteur 1 comporte des rampes de rappel en sélection 2 coopérant (voir figure 3) avec des crabots 3 de fourchettes 4 pour ramener au point mort un rapport de vitesses engagé.

Chaque rampe 2 comporte (voir figure 1) une surface supérieure 2a qui présente une pente qui monte vers un sommet S et prend contact (voir figure 3) avec une surface 3a d'un crabot 3 pour commander lors de la rotation dans un sens du sélecteur 1 la translation de celui-ci et une deuxième surface supérieure 2b présentant à partir du sommet S une pente qui descend pour commander la translation de la surface 3a du crabot lors de la rotation du sélecteur 1 en sens inverse.

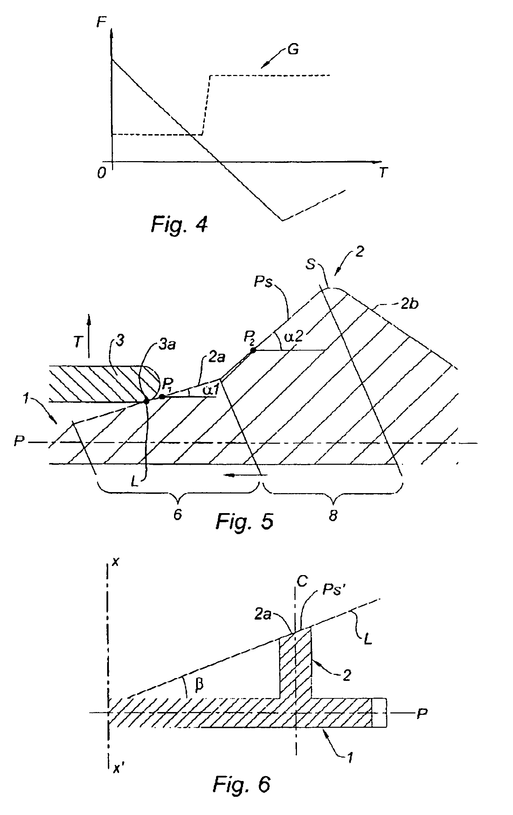

La rampe 2 représentée sur les figures 1 et 2 s'étend selon un cylindre fictif C d'axe x-x' (voir figures 2 et 6). Le cylindre C est sensiblement médian, c'est-à-dire qu'il passe sensiblement au milieu de l'épaisseur de la rampe 2. La figure 5 représente partiellement la rampe 2 en coupe selon le cylindre fictif C, après un développement plan du cylindre C.

On appelle « pente principale » α la pente du profil supérieur Ps de la rampe 2, par rapport au plan P du sélecteur dans une vue en coupe selon le cylindre fictif C.

On appelle « longueur » de la rampe 2, la longueur de l'arc d'intersection de la première surface supérieure 2a de la rampe 2 et du cylindre fictif C, c'est-à-dire la longueur du profil supérieur Ps.

On appelle « pente secondaire » β la pente du profil supérieur Ps' de la rampe 2, dans un plan radial P', par rapport au plan P du sélecteur. En un point de la surface supérieure 2a de la rampe 2, les pentes principale α et secondaire β sont donc mesurées dans deux plans sensiblement perpendiculaires.

Conformément à l'invention, les surfaces 2a et 2b de chaque rampe et la surface 3a dudit crabot 3 sont adaptées pour que le contact entre ces surfaces 2a, 2b ; 3a soit linéique, c'est-à-dire suivant une ligne de contact L, comme illustré par les figures 5 et 6.

En règle générale, la translation des crabots 3 est commandée à l'encontre d'un effort qui varie lors de la course de cette translation. Le plus souvent, cet effort est un effort de billage correspondant à l'effort nécessaire pour dégager une bille sollicitée par un ressort de son logement, ce qui permet de dégager un rapport de vitesse. Cet effort F (voir figure 4) est maximal au début de la course T de translation des crabots 3 puis diminue. Cette figure 4 montre également l'évolution du gain G de la transformation du mouvement, qui correspond à l'évolution de l'angle α.

Conformément à l'invention, au moins une, de préférence les deux surfaces 2a, 2b de chaque rampe 2 présentent une pente principale α (voir figures 1 et 5) qui varie pour que l'effort F exercé sur les surfaces en contact de chaque rampe 2 et de chaque crabot 3 suive un profil désiré lors de la course de translation T de chaque crabot 3.

Comme représenté à la figure 5, la pente principale α présente un angle α₁ constant en tout point P₁ d'une partie inférieure 6 de la rampe 2a et un angle α₂ constant en tout point d'une partie supérieure 8 de cette même rampe 2a, α₁ étant inférieur à α₂.

L'angle α₁ réduit de la partie inférieure permet une démultiplication plus importante dans la portion de la course T de translation où l'effort exercé est maximal.

De préférence, la surface 2a (ou 2b) de la rampe 2 présente, dans un plan de coupe radial P', un profil sensiblement rectiligne comme représenté sur la figure 6. Classiquement, la surface du crabot susceptible d'entrer en contact avec la rampe 2 s'étend perpendiculairement à l'axe x-x'. Pour garantir un contact linéique pendant toute la poussée de la rampe sur cette surface, il est donc nécessaire d'incliner la surface supérieure 2a de la rampe 2 vers l'axe x-x' d'un angle β variable.

Le dispositif de commande selon l'invention permet donc de réduire l'usure des pièces en contact grâce :
- d'une part, au maintien d'un contact linéique et non pas d'un contact ponctuel entre les surfaces des rampes et des crabots, sur toute la course de frottement de la rampe sur le crabot correspondant, et
- d'autre part, à la répartition des efforts résistants sur toute la course de frottement du fait de la variation de l'angle α de la pente principale des rampes.

Bien entendu, la présente invention n'est pas limitée au mode de réalisation décrit, fourni à titre d'exemple illustratif et non limitatif.

En particulier le nombre de rampes n'est pas limitatif.

En outre, lorsque le sélecteur est destiné à commander un crabot double, il peut comporter des rampes disposées symétriquement de chaque côté du sélecteur, comme représenté sur la figure 2. De préférence, les surfaces symétriques des deux rampes symétriques sont sensiblement symétriques par rapport au plan médian P du sélecteur 1.

## Revendications

1. Dispositif de commande du changement des rapports de vitesse dans une boîte de vitesses d'un véhicule, comprenant au moins un crabot (3) de fourchette (4), un sélecteur de vitesses (1) monté en rotation, ledit sélecteur (1) comportant au moins une rampe de rappel en sélection (2) coopérant avec ledit crabot (3) pour ramener au point mort un rapport de vitesses engagé, **caractérisé en ce que** :
- la rampe (2) s'étend selon un cylindre de même axe x, x' que sélecteur (1),
- la rampe comporte deux surfaces (2a) formant une pente principale α par rapport au plan médian (P) du sélecteur (1),
- la première surface (2a)de la rampe (2) monte vers un sommet (S) en prenant contact avec une surface (3a) du crabot (3) pour commander une translation de celui-ci par rotation du sélecteur (1) dans un premier sens,
- la première surface (2a) de la rampe (2) et la surface (3a) du crabot (3) sont adaptées pour que le contact entre ces surfaces soit linéique, et
- la seconde surface (2b) descend à partir du sommet (S).

2. Dispositif de commande selon la revendication 1, **caractérisé en ce que** ladite deuxième surface (2b) est conformée pour commander ladite translation dudit crabot (3) par poussée de ladite deuxième surface (2b) sur ladite surface (3a) dudit crabot (3) lors d'une rotation dudit sélecteur (1) dans un sens opposé audit premier sens.

3. Dispositif de commande selon la revendication 2, **caractérisé en ce que** ladite deuxième surface (2b) et ladite surface (3a) dudit crabot (3) sont conformées de manière à assurer un contact linéique entre lesdites deuxième surface (2b) et surface (3a) dudit crabot (3).

4. Dispositif de commande selon l'une des revendications précédentes, dans lequel la translation desdits crabots (3) est commandée à l'encontre d'un effort qui varie lors de cette translation, **caractérisé en ce qu'**au moins une desdites première et deuxième surfaces (2a, 2b) de ladite rampe (2) présente ladite pente principale α qui est variable.

5. Dispositif de commande selon la revendication 4, **caractérisé en ce qu'**en un point de ladite rampe (2a, 2b), ladite pente principale α est déterminée en fonction de l'effort qu'il est nécessaire d'exercer sur ladite surface (3a) dudit crabot (3) pour déplacer ledit crabot (3) lorsque ladite surface (3a) dudit crabot (3) est en contact avec ledit point de ladite rampe (2).

6. Dispositif de commande selon la revendication 5, **caractérisé en ce que** ladite pente principale α présente un angle α₁ constant sur une partie inférieure (6) de ladite rampe (2a, 2b) et un angle α₂ constant sur une partie supérieure (8) de ladite rampe (2a, 2b), α₁ étant inférieur à α₂.

7. Dispositif de commande selon l'une quelconque des revendications précédentes, **caractérisé en ce qu'**un profil de ladite rampe (2a, 2b) dans un plan (P') de coupe radiale dudit sélecteur (1), présente une pente secondaire β par rapport au plan (P) dudit sélecteur (1), ladite pente secondaire β étant déterminée de manière à assurer ledit contact linéique.

8. Boîte de vitesses, destinée en particulier à un véhicule automobile, comportant un dispositif de commande selon l'une quelconque des revendications précédentes.

9. Boîte de vitesses selon la revendication 8, **caractérisée en ce qu'**elle comporte un double embrayage.

## Claims

1. Control device for changing gears in a gearbox of a vehicle, comprising at least one claw (3) of a fork (4), a gear selector (1) mounted such that it can rotate, the said selector (1) including at least one selection return ramp (2) cooperating with the said claw (3) to return an engaged gear to neutral, **characterized in that**:
- the ramp (2) lies along a cylinder having the same x-x' axis as selector (1);
- the ramp includes two surfaces (2a) forming a main slope α in relation to the centre plane (P) of the selector (1);
- the first surface (2a) of the ramp (2) rises to a peak (S) making contact with a surface (3a) of the claw (3) to cause a translation of the claw by rotation of the selector (1) in a first direction;
- the first surface (2a) of the ramp (2) and the surface (3a) of the claw (3) are arranged so that the contact between these surfaces is uniform; and
- the second surface (2b) descends from the peak (S).

2. Control device according to Claim 1, **characterized in that** the said second surface (2b) is shaped to cause the said translation of the said claw (3) by thrust of the said second surface (2b) on the said surface (3a) of the said claw (3) during a rotation of the said selector (1) in a direction opposite to the said first direction.

3. Control device according to Claim 2, **characterized in that** the said second surface (2b) and the said surface (3a) of the said claw (3) are shaped so as to provide a uniform contact between the said second surface (2b) and surface (3a) of the said claw (3).

4. Control device according to one of the preceding claims, in which the translation of the said claws (3) is produced against a force which varies during this translation, **characterized in that** at least one of the said first and second surfaces (2a, 2b) of the said ramp (2) has the said main slope α which is variable.

5. Control device according to Claim 4, **characterized in that** at a point on the said ramp (2a, 2b), the said main slope α is determined according to the force that needs to be exerted on the said surface (3a) of the said claw (3) to move the said claw (3) when the said surface (3a) of the said claw (3) is in contact with the said point on the said ramp (2).

6. Control device according to Claim 5, **characterized in that** the said main slope α has an angle α₁ which is constant on a lower portion (6) of the said ramp (2a, 2b) and an angle α₂ which is constant on an upper portion (8) of the said ramp (2a, 2b), α₁ being less than α₂.

7. Control device according to any one of the preceding claims, **characterized in that** a profile of the said ramp (2a, 2b) in a radial cross section (P') of the said selector (1), has a secondary slope β in relation to the plane (P) of the said selector (1), the said secondary slope β being determined so as to provide the said uniform contact.

8. Gearbox, designed in particular for a motor vehicle, including a control device according to any one of the preceding claims.

9. Gearbox according to Claim 8, **characterized in that** it includes a twin clutch.

## Patentansprüche

1. Gangwechselsteuervorrichtung in einem Getriebe eines Fahrzeugs, umfassend mindestens eine Klauenkupplung (3) einer Gabel (4), einen drehbar montierten Gangwähler (1), wobei der Gangwähler (1) mindestens eine Gangwahlrückstellrampe (2) umfasst, die mit der Klauenkupplung (3) zusammenwirkt, um einen eingelegten Gang in die Leerlaufstellung zurückzuführen, **dadurch gekennzeichnet, dass**:
- sich die Rampe (2) entlang eines Zylinders mit derselben Achse x, x' wie der Gangwähler (1) erstreckt,
- die Rampe zwei Flächen (2a) umfasst, die ein Hauptgefälle α zur Mittelebene (P) des Gangwählers (1) bilden,
- die erste Fläche (2a) der Rampe (2) zu einer Spitze (S) aufsteigt, die mit einer Fläche (3a) der Klauenkupplung (3) in Kontakt kommt, um eine Translation derselben durch Drehung des Gangwählers (1) in eine erste Richtung zu steuern,
- die erste Fläche (2a) der Rampe (2) und die Fläche (3a) der Klauenkupplung (3) derart ausgeführt sind, dass der Kontakt zwischen diesen Flächen linear ist, und
- die zweite Fläche (2b) von der Spitze (S) absteigend ist.

2. Steuervorrichtung nach Anspruch 1, **dadurch gekennzeichnet, dass** die zweite Fläche (2b) derart ausgeführt ist, dass sie die Translation der Klauenkupplung (3) durch Schieben der zweiten Fläche (2b) auf der Fläche (3a) der Klauenkupplung (3) bei einer Drehung des Gangwählers (1) in eine der ersten Richtung entgegengesetzte Richtung steuert.

3. Steuervorrichtung nach Anspruch 2, **dadurch gekennzeichnet, dass** die zweite Fläche (2b) und die Fläche (3a) der Klauenkupplung (3) derart ausgeführt sind, dass sie einen linearen Kontakt zwischen der zweiten Fläche (2b) und der Fläche (3a) der Klauenkupplung (3) gewährleisten.

4. Steuervorrichtung nach einem der vorhergehenden Ansprüche, bei der die Translation der Klauenkupplungen (3) gegen eine Kraft, die bei dieser Translation variiert, gesteuert wird, **dadurch gekennzeichnet, dass** mindestens eine der ersten und zweiten Flächen (2a, 2b) der Rampe (2) das Hauptgefälle α, das variabel ist, aufweist.

5. Steuervorrichtung nach Anspruch 4, **dadurch gekennzeichnet, dass** an einem Punkt der Rampe (2a, 2b) das Hauptgefälle α in Abhängigkeit von der Kraft bestimmt wird, die auf die Fläche (3a) der Klauenkupplung (3) ausgeübt werden muss, um die Klauenkupplung (3) zu verschieben, wenn die Fläche (3a) der Klauenkupplung (3) mit dem Punkt der Rampe (2) in Kontakt ist.

6. Steuervorrichtung nach Anspruch 5, **dadurch gekennzeichnet, dass** das Hauptgefälle α einen Winkel α₁, der auf einem unteren Teil (6) der Rampe (2a, 2b) konstant ist, und einen Winkel α₂ aufweist, der auf einem oberen Teil (8) der Rampe (2a, 2b) konstant ist, wobei α₁ kleiner als α₂ ist.

7. Steuervorrichtung nach einem der vorhergehenden Ansprüche, **dadurch gekennzeichnet, dass** ein Profil der Rampe (2a, 2b) in einer Radialschnittebene (P') des Gangwählers (1) ein Nebengefälle β zur Ebene (P) des Gangwählers (1) aufweist, wobei das Nebengefälle β derart bestimmt ist, dass es den linearen Kontakt sicherstellt.

8. Getriebe, das insbesondere für ein Kraftfahrzeug bestimmt ist, umfassend eine Steuervorrichtung nach einem der vorhergehenden Ansprüche.

9. Getriebe nach Anspruch 8, **dadurch gekennzeichnet, dass** es eine doppelte Kupplung umfasst.
